# EUROPÄISCHE PATENTSCHRIFT

(11) **EP 1 268 123 B1**
(45) Veröffentlichungstag und Bekanntmachung des Hinweises auf die Patenterteilung: **23.11.2011**
(21) Anmeldenummer: 02719967.8
(22) Anmeldetag: 28.02.2002
(51) Int. Cl.: B23Q 1/00

(54) **VORRICHTUNG ZUM LÖSBAREN HALTEN VON WERKSTÜCKEN AN BEARBEITUNGSEINRICHTUNGEN**
DEVICE FOR THE DETACHABLE MOUNTING OF WORKPIECES ON MACHINING DEVICES
DISPOSITIF POUR FIXER DE FA ON AMOVIBLE DES PIECES A USINER SUR DES DISPOSITIFS D'USINAGE

(30) Priorität: 02.04.2001 DE 10116229
(43) Veröffentlichungstag der Anmeldung: 02.01.2003
(73) Patentinhaber: System 3R Schweiz AG, 9230 Flawil (CH)
(72) Erfinder: ROTH, Walter, CH-9012 St. Gallen (CH); KURATLI, Rudolf, CH-9203 Niederwil (CH)
(74) Vertreter: De Colle, Piergiacomo
(86) Internationale Anmeldenummer: PCT/EP2002/002174
(87) Internationale Veröffentlichungsnummer: WO 2002/078898

(56) Entgegenhaltungen:
- EP-A- 0 922 529
- EP-A- 1 044 760
- DE-A- 19 841 928
- DE-C- 19 705 685
- DE-U- 20 021 047
- US-A- 5 415 384
- US-A- 5 961 261

## Beschreibung

Die Erfindung bezieht sich auf eine Vorrichtung zum lösbaren Halten von Werkstücken oder von Paletten für Werkstücke an einer Bearbeitungseinrichtung umfassend eine Aufspannplatte, die mit der Bearbeitungseinrichtung zur Bearbeitung des Werkstückes verbindbar ist, einen Spannzapfen, der mit der Palette oder mit dem Werkstück verbindbar ist, und der in der Aufspannplatte lösbar gehalten werden kann, wobei mindestens eine Feder zur Erzeugung einer Aufspannkraft zur Befestigung des Spannzapfens an die Aufspannplatte vorgesehen ist, einen Kolben, der hydraulisch oder pneumatisch entgegen der Aufspannkraft bewegbar ist, und eine Kugelhülse mit Kugeln, die in die Kugelhülse von dem Kolben bewegbar und mit dem Spannzapfen derart zusammenwirkend angeordnet sind, dass der Spannzapfen entgegen der Aufspannkraft gelöst werden kann, wobei an der Aufspannplatte ein mit dem Spannzapfen zusammenwirkender einstückig und ringscheibenförmig ausgebildeter Zentrierbereich ausgebildet ist, wobei die mit dem Spannzapfen zusammenwirkenden Kugeln in Bezug auf die Kugelhülse radial bewegbar angeordnet sind. Eine solche Vorrichtung ist aus EP104476012 bekannt.

Bei der Bearbeitung von Werkstücken, beispielsweise von Formen für Druckund Spritzgussmaschinen, werden hohe Anforderungen an die Genauigkeit der Abmessungen gestellt. Auch nach dem Durchlaufen mehreren Bearbeitungsschritten dürfen die Abmessungen der Formteile im wesentlichen nur wenige Tausendstel Millimeter von den Vorgaben abweichen. Die heutigen Bearbeitungsmaschinen ermöglichen diese Präzision u.a. dank der computergesteuerten Bearbeitung. Eine präzise Bearbeitung setzt aber am Werkstück eine genaue Festsetzung und Reproduzierbarkeit des Nullpunktes des x-y-z-Koordinatensystems für die Computersteuerung voraus. Die Massgenauigkeit des Werkstückes ist stark abhängig von der Genauigkeit der Spannvorrichtungen, die verwendet werden um die Werkstücke in den verschiedenen Schritten der Bearbeitung reproduzierbar und lösbar fest zu halten.

Aus der EP 922529-A1 ist eine gattungsgemässe Einheit zum lösbaren Verbinden von Teilen eines Palettiersystems bekannt. Das System besteht im Wesentlichen aus aneinander lösbar festsetzbaren Kopplungselementen, wobei das erste Kopplungselement in einer Aufnahmeplatte für Paletten angeordnet ist, und wobei das zweite Kopplungselement zentrierbar und federnd mit dem ersten Kopplungselement verbindbar ist. Zur Erzeugung der Kopplungskraft sind ein scheibenförmiger und mittels Hydraulik bewegbarer Kolben, Federn und einen Bolzen vorgesehen, wobei der Bolzen in einem Teilbereich zusammen mit dem zweiten Kopplungselement eine Kugelbahn bildet. Zur Zentrierung weist das erste Kopplungselement mindestens drei Federteile auf, die entlang einer Kreislinie um die Kopplungsachse vorstehen und mit dem zweiten Kopplungselement in Eingriff gebracht werden.

Ausgehend von diesem Stand der Technik ist es Aufgabe der Erfindung, eine Vorrichtung zum lösbaren Halten von Werkstücken anzugeben, die aus weniger und kleinere Einzelteile zusammengesetzt ist und wobei am Werkstück für die lösbare Befestigung ein möglichst kleiner Bereich in Anspruch genommen wird.

Diese Aufgabe wird gelöst durch eine Vorrichtung zum lösbaren Halten von Werkstücken oder von Paletten für Werkstücke an einer Bearbeitungseinrichtung umfassend eine Aufspannplatte, die mit der Bearbeitungseinrichtung zur Bearbeitung des Werkstückes verbindbar ist, einen Spannzapfen, der mit der Palette oder mit dem Werkstück verbindbar ist, und der in der Aufspannplatte lösbar gehalten werden kann, wobei mindestens eine Feder zur Erzeugung einer Aufspannkraft zur Befestigung des Spannzapfens an die Aufspannplatte vorgesehen ist, einen Kolben, der hydraulisch oder pneumatisch entgegen der Aufspannkraft bewegbar ist, und eine Kugelhülse mit Kugeln, die in die Kugelhülse von dem Kolben bewegbar und mit dem Spannzapfen derart zusammenwirkend angeordnet sind, dass der Spannzapfen entgegen der Aufspannkraft gelöst werden kann, wobei an der Aufspannplatte ein mit dem Spannzapfen zusammenwirkender einstückig und ringscheibenförmig ausgebildeter Zentrierbereich ausgebildet ist, wobei die mit dem Spannzapfen zusammenwirkenden Kugeln in Bezug auf die Kugelhülse radial bewegbar angeordnet sind, wobei zur radialen Bewegung der Kugeln zwischen dem Kolben und dem Spannzapfen an dem Kolben und an dem Spannzapfen Steuerflanken ausgebildet sind, wobei die Steuerflanken einen unterschiedlichen Neigungswinkel in Bezug auf die Spannachse aufweisen, derart, dass mit der radialen Bewegung der Kugeln eine Untersetzung der Kraftübertragung von mindestens 3 zu 1 erreicht wird und insbesondere derart, dass der Spannzapfen mit der Aufspannplatte derart mechanisch verriegelbar ist, dass, im gespannten Zustand der Vorrichtung, der Spannzapfen und die Aufspannplatte nur durch Zerstörung gelöst werden können.

Bevorzugte Weiterbildungen der Erfindung ergeben sich aus den abhängigen Ansprüchen.

Es ist von Vorteil, dass der Spannzapfen, und das damit verbundene Werkstück oder die Palette praktisch spielfrei eingespannt und zentriert werden kann. Dies wird dadurch erreicht, dass die Aufspannplatte in dem Zentrierbereich und der Spannzapfen miteinander zur Zentrierung zusammenwirkende zueinander parallel verlaufende Spannflächen aufweisen, die jeweils als Mantelflächen eines Kegelstumpfes ausgebildet sind, dessen Kegelspitze innerhalb der Vorrichtung liegt.

Es ist auch von Vorteil, dass auch relativ schwere Werkstücke mit einem relativ geringen Kraftaufwand höchst genau positioniert und lösbar festgehalten werden können. Dies wird dadurch erreicht, dass, im entspannten Zustand, die sich verjüngende Spannfläche in dem Zentrierbereich der Aufspannplatte im Mikronbereich näher an die z-Achse der Vorrichtung angeordnet ist als die sich verjüngende Spannfläche an dem Spannzapfen. Es wird auch eine kompaktere Bauweise des Palettiersystems möglich.

Es ist auch von Vorteil, dass die Spannflächen leicht und besonders wirkungsvoll von Verschmutzungen befreit werden können. Dies wird dadurch erreicht, dass die sich verjüngenden zusammenwirkend angeordneten Spannflächen im entspannten Zustand einen Ringkanal für ein Reinigungs- oder Spülmedium bilden.

Es ist auch von Vorteil, dass die Vorrichtung eine integrierte Anwesenheitskontrolle für das Werkstück möglich macht. Dies wird dadurch erreicht, dass die Aufspannplatte mindestens zwei unterschiedlich ausgebildete z-Auflagebereiche mit Zuführöffnungen für das Spül- oder Reinigungsmedium aufweist, derart, dass die z-Auflagebereiche durch die Strömung des Spül- oder Reinigungsmediums während des Spannvorganges gereinigt werden und wobei aufgrund der Strömung des Spül- oder Reinigungsmediums eine Kontrolle auf die Anwesenheit eines Werkstückes benachbart zu den z-Auflagebereichen der Vorrichtung durchführbar ist.

Es ist auch von Vorteil, dass der Kraftaufwand zum Spannen des Spannzapfens möglichst gering gehalten werden kann und dass die Spannkraft möglichst wirkungsvoll vom Kolben auf den Spannzapfen übertragen werden kann. Dies wird dadurch erreicht, dass zur radialen Bewegung der Kugeln zwischen dem Kolben und dem Spannzapfen an dem Kolben und an dem Spannzapfen Steuerflanken ausgebildet sind, die einen unterschiedlichen Neigungswinkel in Bezug auf die Spannachse z aufweisen, derart, dass eine Untersetzung der Bewegung von mindestens 3 zu 1 erreicht wird und insbesondere derart, dass der Spannzapfen mit der Aufspannplatte derart mechanisch verriegelbar ist, dass, im gespannten Zustand der Vorrichtung, der Spannzapfen und die Aufspannplatte nur durch Zerstörung gelöst werden können.

Ausführungsbeispiele der Erfindung werden anhand der Figuren beschrieben.

Es zeigen:
- Figur 1: eine perspektivische Sicht auf eine erfindungsgemässe eine Vorrichtung zum lösbaren Halten von Werkstücken,
- Figur 2: eine weitere perspektivische Sicht auf die Vorrichtung von Figur 1, gesehen auf die gegenüberliegende Seite,
- Figur 3: einen Schnitt durch die Vorrichtung von Figur 1,
- Figur 4: einen weiteren, stark vergrösserten Schnitt durch die Vorrichtung von Figur 1, im Vergleich zum Schnitt von Figur 3 rechtwinklig angesetzt,
- Figur 5: einen weiteren, vergrösserten Schnitt durch die Vorrichtung von Figur 1,
- Figur 6: eine perspektivische Sicht auf eine weitere erfindungsgemässe Vorrichtung zum lösbaren Halten von Werkstücken,
- Figur 7: eine weitere perspektivische Sicht auf die Vorrichtung von Figur 5, gesehen auf die gegenüberliegende Seite,
- Figur 8: einen Schnitt durch die Vorrichtung von Figur 4 und
- Figur 9: einen weiteren, stark vergrösserten Schnitt durch den Spannzapfen aus der Vorrichtung von Figur 7.

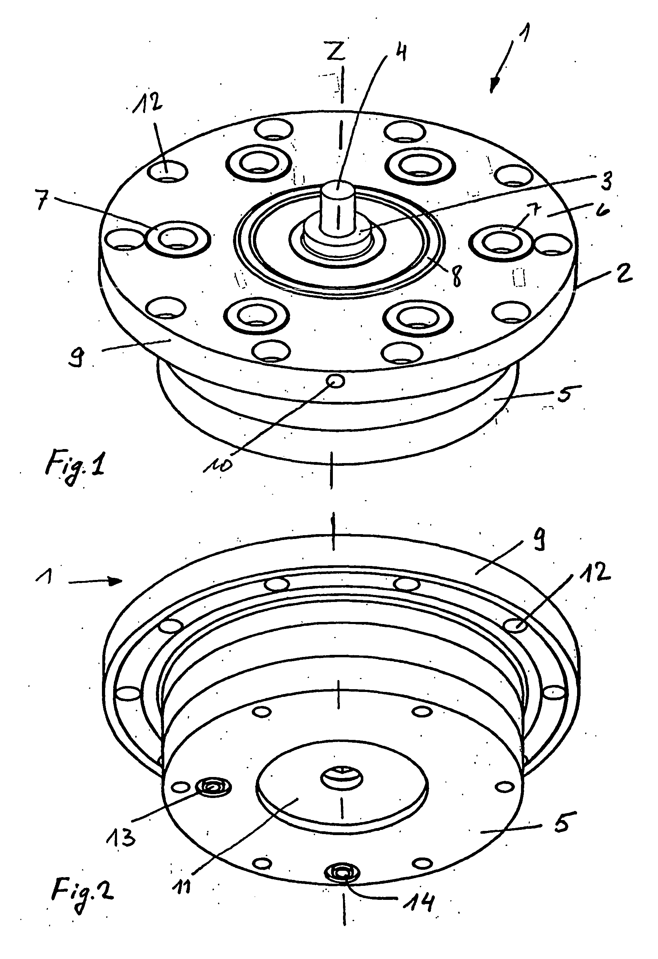

In Figur 1 ist einen Vorrichtung 1 zum lösbaren Halten von Werkstücken oder Paletten mit Sicht auf einer Oberseite perspektivisch dargestellt. An der Vorrichtung 1 sind in Figur 1 von oben nach unten eine Aufspannplatte 2, einen Spannzapfen 3 mit einer Schraube 4 zur lösbaren Befestigung des Spannzapfens an eines hier nicht dargestellten Werkstückes oder einer Palette, sowie eine Abschlussplatte 5 ersichtlich. Die Vorrichtung 1 wird an oder in eine Bearbeitungseinrichtung, beispielsweise eine computergesteuerte Präzisionsfräsmaschine befestigt und dient zur definierten wiederholbaren Befestigung eines Werkstückes oder einer Palette, die Werkstücke trägt. Die Vorrichtung 1 ist im wesentlichen kreisförmig symmetrisch um einer Achse z aufgebaut. Die Aufspannplatte 2 dient zum lagedefinierten Aufspannen des Werkstückes oder der Palette mit Werkstücken, das oder die mittels eines Fräswerkzeuges bearbeitet werden kann bzw. können.

Die Oberseite 6 der Aufspannplatte 2 dient zur genauen Lagebestimmung der z-Ebene des zu bearbeitende Werkstückes und weist hierzu mehrere über die Oberseite 6 verteilt angeordnete sogenannte z-Auflagebereiche 7,8 auf. Als erste z-Auflagenbereiche 7 sind mehrere auf einem Kreis verteilt angeordnete ringförmige Bereiche 7, sogenannte z-Inseln 7, ersichtlich. Ein weiterer z-Auflagebereich 8 ist konzentrisch um die z-Achse der Vorrichtung 1 ringförmig ausgebildet. Die genaue Lage und die Anordnung der Auflagebereiche 7,8 sind als Bezugsfläche in der Z-Richtung des Werkstückes massgeblich. Die Abschlussplatte 5 dient einerseits zum Abschliessen und zum Zusammenbau mit der Aufspannplatte 2 zu der Vorrichtung 1 und andererseits zur Verbindung der Vorrichtung 1 mit hydraulischen oder pneumatischen Medien zum Bedienen und Reinigen der Vorrichtung.

An einer Randfläche 9 der Aufspannplatte 2 in Figur 1 ist weiterhin noch eine erste Öffnung 10 ersichtlich, die in der Fertigung notwendig war zur Herstellung eines Zuführkanals 20, die aber anschliessend wieder verschlossen wurde. Das Spül- oder Reinigungsmittel wird während dem Aufspannen an sämtliche Flächen, die für die genaue Lagezuordnung des zu bearbeitenden Werkstückes wichtig sind, zugeführt. Somit wird gewährleistet, dass das Werkstück in allen Schritten der Bearbeitung in derselben Lage in Bezug auf dem Nullpunkt eines X-y-z-Koordinatensystems, ohne störende Partikel, befestigt wird.

In Figur 2 ist die gleiche Vorrichtung nochmals perspektivisch dargestellt. Im zentralen Bereich der Abschlussplatte 5 ist weiterhin einen Teil eines Kolbens 11 ersichtlich. Der Kolben 11 ist in der Richtung der z-Achse mittels Pneumatik oder Hydraulik innerhalb der Vorrichtung 1 verschiebbar angeordnet. Weiterhin sind in Figur 1 und Figur 2 Bohrungen 12 ersichtlich, in die dazupassenden Schrauben eingeführt werden können, die zur Befestigung der Vorrichtung 1 an einer übergeordneten Bereich der Bearbeitungseinrichtung, beispielsweise ein Maschinentisch oder -bett dienen. Auf der Unterseite der Abschlussplatte 5 sind auch eine Zuführöffnung 13 für die Zuführung des Hydraulik- oder Pneumatikmittels zur Bewegung des Kolbens 11, und eine weitere Zuführöffnung 14 für die Zuführung des Spül- oder Reinigungsmittels, beispielsweise Spülluft mit einem Druck von weniger als 6 bar, zu den z-Inseln 7 ersichtlich.

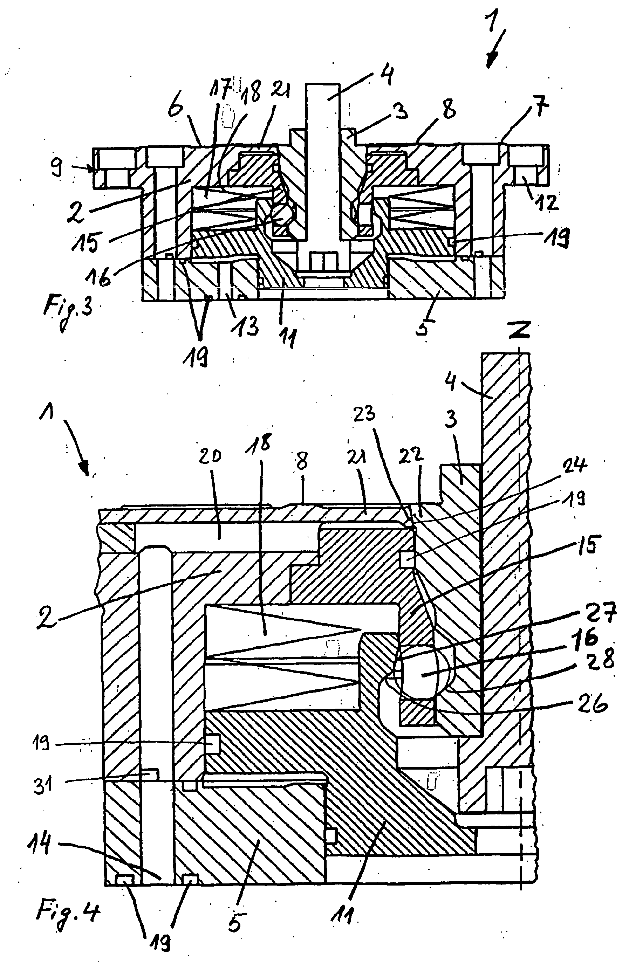

In Figur 3 ist die Vorrichtung von Figur 1 und 2 geschnitten dargestellt. Der Schnitt von Figur 3 wurde auf einer Halblinie durch die erste Zuführöffnung 13 angesetzt. Im Schnitt von Figur 3 sind weiterhin eine Kugelhülse 15, mit darin angeordnet eine Anzahl Kugeln 16 und ein Paket 17 von Federn 18, hier als ein Paket von Tellerfedern 18 ausgebildet, dargestellt. Zur Abdichtung der Vorrichtung 1 gegenüber dem hydraulischen oder pneumatischen Medium, und auch zur Abdichtung gegenüber dem Spül- oder Reinigungsmittel sind an verschiedenen Stellen der Vorrichtung 1 Dichtungen vorgesehen. Diese Dichtungen wurden im Schnitt von Figur 3 weggelassen. Einzelne Aufnahmen 19, in die solche Dichtungen aufgenommen werden können, sind jedoch im Schnitt von Figur 3 ersichtlich.

In Figur 4 ist ein weiterer Schnitt durch die Vorrichtung 1 von Figur 1 stark vergrössert und nur bereichsweise dargestellt. Der Schnitt von Figur 4 wurde unter einem rechten Winkel zum Schnitt von Figur 3 angesetzt. In Figur 4 ist somit auch einen Kanal 20 ersichtlich, der für die Zuführung des Spül- oder Reinigungsmittels zum zentralen Bereich der Vorrichtung 1 dient. Im Schnitt von Figur 3 und insbesondere in der Vergrösserung von Figur 4 ist ersichtlich, wie die Aufspannplatte 2 einen ringscheibenförmig ausgebildeten Zentrierbereich 21 aufweist. Der Zentrierbereich 21 ist durchgehend ausgebildet, d.h. er umfasst einen Bereich von 360° um die z-Achse der Vorrichtung 1. Der Zentrierbereich 21 verläuft von der Aufspannplatte 2 radial nach innen und grenzt an einem dazu passend ausgebildeten Bereich 22 des Spannzapfens 3.

Durch die verhältnismässig dünnwandige ringscheibenförmige Ausbildung des Zentrierbereiches 21 und durch die einstückige Ausbildung zusammen mit dem Rest der Aufspannplatte 2 wird der Zentrierbereich 21 mit dem freien Ende 23 derart federnd, dass das freie Ende 23 beim Einspannen des Zapfens 3 in der Richtung der z-Achse abwärts bewegbar wird. Die Spannfläche 23 am freien Ende des Zentrierbereiches 21 wirkt auf dem gesamten Umfang zusammen mit einer dazupassenden spannfläche 24 im Teilbereich 22 des Spannzapfens 3. Die erste Spannfläche 23 des Zentrierbereiches 21 und die zweite Spannfläche 24 des Spannzapfens 3 sind in einem Präzisionsbearbeitungsverfahren kegelförmig und genau zueinander passend ausgebildet. Die Kegelwinkel des Zentrierbereiches 21 und des Spannzapfens 3 sind identisch, das heisst die Spannfläche 23 am freien Ende des Zentrierbereiches 21 und die Spannfläche 24 im Teilbereich des Spannzapfens 3 verlaufen parallel. Die Spannflächen 23,24 sind wie die Mantelflächen eines Kegelstumpfes ausgebildet, wobei die Kegelspitze innerhalb der Vorrichtung 1 liegt. Dabei ist zu bemerken, dass die erste Spannfläche 23 einige Mikron, weniger als ein Hundertstelmillimeter, näher an die z-Achse der Vorrichtung 1 liegt als die zweite Spannfläche 24.

Durch die komplementäre Ausbildung des Zentrierbereiches 21 und des Spannzapfens 3 wird erreicht, dass beim Einspannen des Spannzapfens 3 im zentralen Bereich der Aufspannplatte 2 eine radial wirkende Kraft, eine sogenannte Vorspannung, erzeugt wird, die auf dem gesamten Kreisumfang des Spannzapfens 3, d.h. möglichst gleichmässig, einwirkt. Beim Anheben des Spannzapfens 3 wird einen Kanal, einen ringförmigen Spalt zwischen Spannzapfen und Aufspannplatte gebildet, der beim Ablassen wieder geschlossen wird. Das Spülmittel durchströmt diesen ringförmigen Spalt mit einer relativ hohen Strömungsgeschwindigkeit. Der Strömungsquerschnitt für das Spül- und Reinigungsmittel wird also so klein wie möglich gehalten. Dadurch wird erreicht, dass die Wirksamkeit der Reinigung so hoch wie möglich wird. Die Wirksamkeit des Spülmittels wird nicht verringert, weil beim Zusammenfügen von Spannzapfen 3 und Aufspannplatte 2 zu keiner Zeit unnötig grosse Strömungsquerschnitte gebildet werden. Die Spülluft kann somit bis zum Schluss des Spannvorganges durch diesen ringförmigen Spalt entweichen. Auch zu den z-Inseln 7 kann Spülluft zugeführt werden.

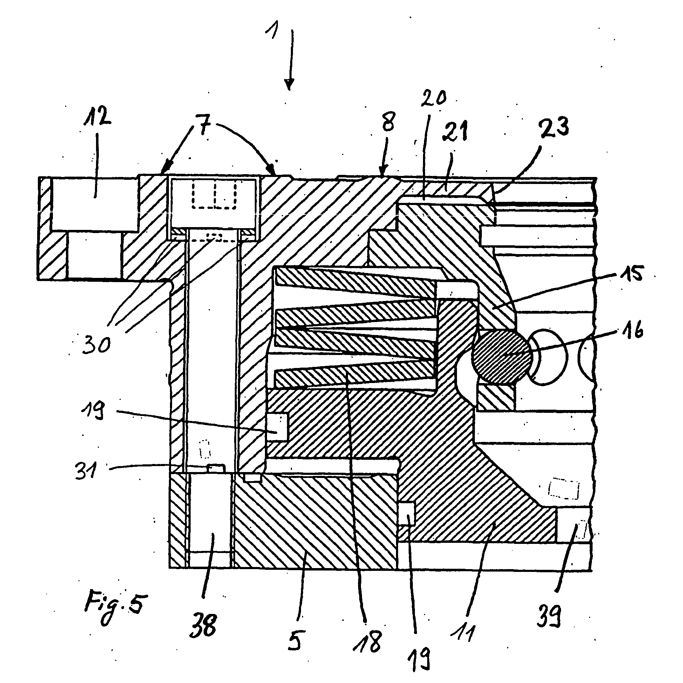

In Figur 5 sind Durchbrüche 30 ersichtlich, die den Luftzufuhr zum Bereich der z-Insel 7 ermöglichen und einen Ringkanal 31, der zur Verteilung der Spülluft auf die verschiedenen z-Inseln 7 dient. Die z-Inseln 7 werden in gleicher Art und Weise wie der ringförmige konzentrische z-Auflagebereich 8 gereinigt, was zu einer weiteren präzise definierten Positionierung des Werkstückes beiträgt. In Figur 5 ist auch eine der Schrauben 38 dargestellt, die zur Befestigung der Abschlussplatte 5 an die Aufspannplatte 2 dienen. In Figur 5 wurde der Spannzapfen 3 weggelassen um die Sicht auf die Kugelhülse 15 freizugeben. Der Kolben 11 weist eine zentrale Bohrung 39 auf, die als Entlüftungsbohrung dient und durch die das Spül- oder Reinigungsmittel und die darin mitgenommenen Verunreinigungen entweichen können.

Der Spannzapfen 3 wird an weiteren Stellen an dessen Umfang lösbar in der Vorrichtung 1 festgehalten. Im Betriebszustand, das heisst wenn das Werkstück eingespannt ist, wirkt die Kraft des Tellerfederpaketes 18 auf dem Kolben 11 nach unten. Der Kolben 11 hat auf seiner Innenseite, d.h. auf dem zum Spannzapfen 3 gerichteten Innenumfang ein Profil 26, 27 das mit den Kugeln 16 in der Kugelhülse 15 zusammenwirkt. Die Kugelhülse 15 dient zur Lagerung der Kugeln 16, die auf einem Kreis um den Spannzapfen 3 angeordnet sind. Der Spannzapfen 3 weist im Bereich der Kugeln 16 ebenfalls ein genau festgelegtes Profil 28 auf. Die Profile dienen als Steuerflanken 26,27,28 für die Kugeln 16 und sind derart mit unterschiedlichen Winkeln ausgebildet, dass beim Lösen und Festspannen des Spannzapfens 3 in die Vorrichtung 1 die Spannkraft mit einer Untersetzung von beispielsweise mindestens 3 zu 1 übertragen wird. Dadurch wird erreicht, dass auch mit einer relativ geringen Spannkraft des Kolbens 11 der Spannzapfen mit einer relativ hohen Kraft gehalten wird. Die Kraft, die im angespannten Zustand auf dem Spannzapfen wirkt, ist so hoch, dass der Zapfen 3 nur nach Zerstörung der Vorrichtung entfernt werden könnte.

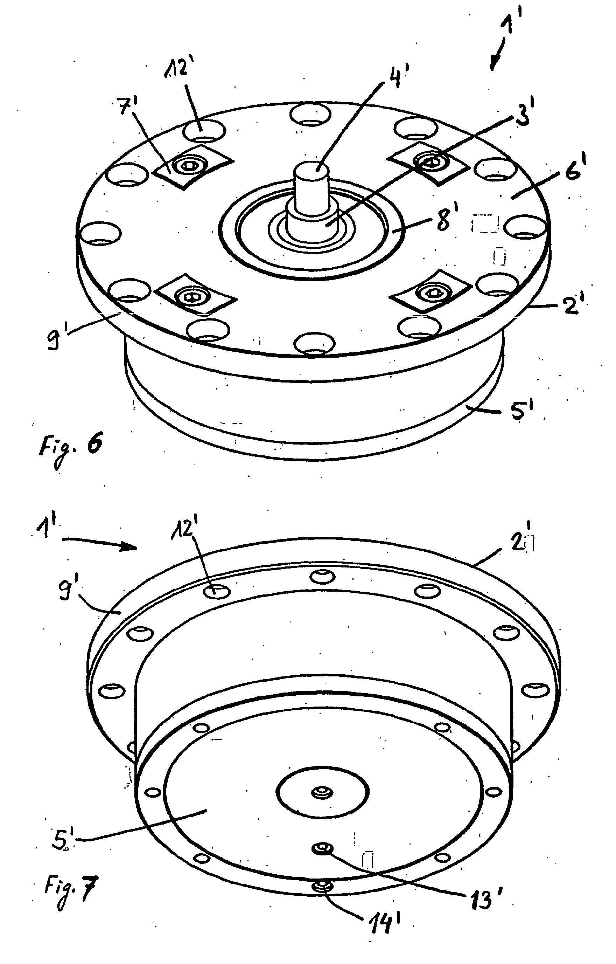

In den Figuren 6, 7 und 8 ist ein zweites Ausführungsbeispiel der erfindungsgemässen Vorrichtung 1 dargestellt. In diesem Ausführungsbeispiel ist der federnde Bereich am Spannzapfen statt an der Aufspannplatte ausgebildet.

Hier weist die Spannfläche 24' einen Aussendurchmesser auf, der wenige Mikron grösser ist als der Innendurchmesser der Aufspannplatte im entsprechenden Bereich. Für funktionell äquivalente Teile wurden die gleichen Bezugszeichen eingesetzt. Die Kugelhülse 15' von Figur 7 ist im Vergleich zur Kugelhülse 15 von Figur 3 einfacher ausgebildet. Der Kolben 11',31 ist Im Vergleich zum Kolben 11 von Figur 3 zweiteilig ausgebildet.

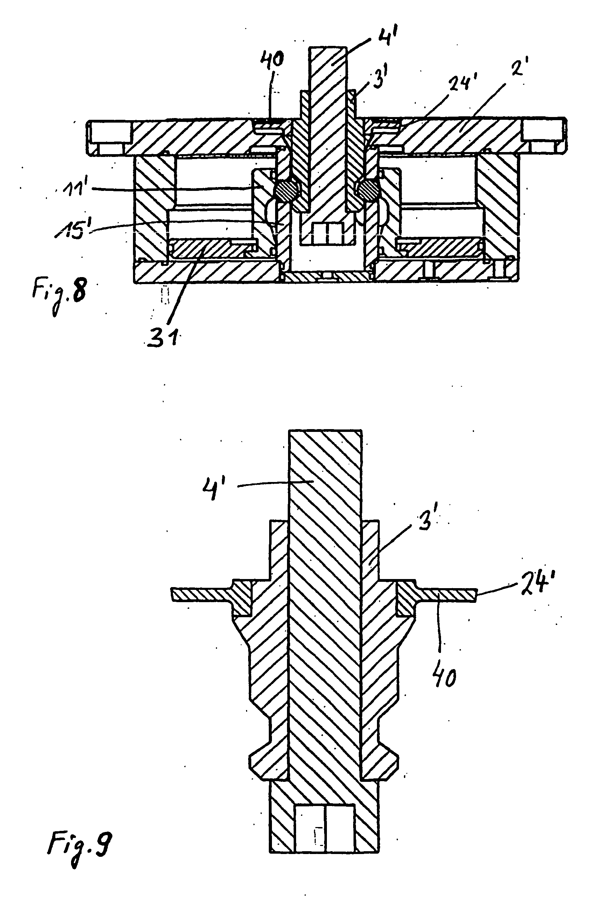

In Figur 9 ist der Spannzapfen 3' aus dem zweiten Ausführungsbeispiel geschnitten, ohne die Aufspannplatte 2', dargestellt. Hier ist ersichtlich, wie am Spannzapfen 3' einen Spannring 40 mit einer Spannfläche 24' ausgebildet ist. Der Spannring 40 wird aus einem Werkstoff hergestellt, der eine bessere Biegsamkeit als der Rest des Spannzapfens 3' aufweist und eine bessere Federwirkung gewährleistet.

Das hier vorgeschlagene spielfreie Spannsystem wird vor allem verwendet um Werkstücke wiederholbar mit hoher Präzision an Bearbeitungsmaschinen einspannen zu können, wobei während der Bearbeitung hohe Kräfte und grosse Erschütterungen auf das Werkstück einwirken, beispielsweise bei schneillaufenden Präzisionsfräsmaschinen.

## Patentansprüche

1. Vorrichtung zum lösbaren Halten von Werkstücken oder von Paletten für Werkstücke an einer Bearbeitungseinrichtung umfassend eine Aufspannplatte (2), die mit der Bearbeitungseinrichtung zur Bearbeitung des Werkstückes verbindbar ist, einen Spannzapfen (3), der mit der Palette oder mit dem Werkstück verbindbar ist, und der in der Aufspannplatte (2) lösbar gehalten werden kann wobei mindestens eine Feder 18 zur Erzeugung einer Aufspannkraft zur Befestigung des Spannzapfens (3) an die Aufspannplatte (2) vorgesehen ist, einen Kolben (11), der hydraulisch oder pneumatisch entgegen der Aufspannkraft bewegbar ist, und eine Kugelhülse (15) mit Kugeln (16), die in die Kugelhülse von dem Kolben (11) bewegbar und mit dem Spannzapfen (3) derart zusammenwirkend angeordnet sind, dass der Spannzapfen (3) entgegen der Aufspannkraft gelöst werden kann, wobei an der Aufspannplatte (2) ein mit dem Spannzapfen (3) zusammenwirkender einstückig und ringscheibenförmig ausgebildeter Zentrierbereich (21) ausgebildet ist, wobei die mit dem Spannzapfen (3) zusammenwirkenden Kugeln (16) in Bezug auf die Kugelhülse (15) radial bewegbar angeordnet sind, **dadurch gekennzeichnet, dass** zur radialen Bewegung der Kugeln (16) zwischen dem Kolben (11) und dem Spannzapfen (3) an dem Kolben und an dem Spannzapfen Steuerflanken (26,27,28) ausgebildet sind, wobei die Steuerflanken (26,27,28) einen unterschiedlichen Neigungswinkel in Bezug auf die Spannachse (z) aufweisen, derart, dass mit der radialen Bewegung der Kugeln (16) eine Untersetzung der Kraftübertragung von mindestens 3 zu 1 erreicht wird und insbesondere derart, dass der Spannzapfen (3) mit der Aufspannplatte (2) derart mechanisch verriegelbar ist, dass, im gespannten Zustand der Vorrichtung, der Spannzapfen (3) und die Aufspannplatte (2) nur durch Zerstörung gelöst werden können.

2. Vorrichtung zum lösbaren Halten von Werkstücken nach dem Anspruch 1, **dadurch gekennzeichnet, dass** die Aufspannplatte (2) im Zentrierbereich (21) und der Spannzapfen (3) miteinander zur Zentrierung zusammenwirkende zueinander parallel verlaufende Spannflächen (23,24) aufweisen, die jeweils als Mantelflächen eines Kegelstumpfes ausgebildet sind, dessen Kegelspitze innerhalb der Vorrichtung liegt.

3. Vorrichtung zum lösbaren Halten von Werkstücken nach dem Anspruch 1 oder 2, **dadurch gekennzeichnet, dass**, im entspannten Zustand, die sich verjüngende Spannfläche (23) im Zentrierbereich (21) der Aufspannplatte (2) im Mikronbereich näher an die z-Achse der Vorrichtung angeordnet ist als die sich verjüngende Spannfläche (24) am Spannzapfen (3).

4. Vorrichtung zum lösbaren Halten von Werkstücken nach einem der Anspruche 1 bis 3, **dadurch gekennzeichnet, dass** die sich verjüngenden zusammenwirkend angeordneten Spannflächen (23,24) im entspannten Zustand einen Ringkanal für ein Reinigungs- oder Spülmedium bilden.

5. Vorrichtung zum lösbaren Halten von Werkstücken nach einem der Ansprüche 1 bis 4, **dadurch gekennzeichnet, dass** die Aufspannplatte (2) mindestens zwei unterschiedlich ausgebildete z-Auflagebereiche (7,8) mit Zuführoffnungen (30) für das Spül- oder Reinigungsmedium aufweist, derart, dass die z-Auflagebereiche durch die Strömung des Spül- oder Reinigungsmediums während des Spannvorganges gereinigt werden und wobei aufgrund der Strömung des Spül- oder Reinigungsmediums eine Kontrolle auf die Anwesenheit eines Werkstückes benachbart zu den z-Auflagebereichen der Vorrichtung durchführbar ist.

## Claims

1. Device for holding workpieces or pallets for workpieces in a releasable manner on a machining apparatus, comprising a mounting plate (2) which can be connected to the machining apparatus for machining the workpiece, a clamping pin (3) which can be connected to the pallet or to the workpiece and can be held in the mounting plate (2) in a releasable manner, at least one spring (18) for producing a clamping force for fastening the clamping pin (3) to the mounting plate (2) being provided, a piston (11) which can be moved hydraulically or pneumatically against the clamping force, and a ball sleeve (15) having balls (16) which can be moved into the ball sleeve by the piston (11) and are arranged so as to interact with the clamping pin (3) in such a way that the clamping pin (3) can be released against the clamping force, a centring region (21) which interacts with the clamping pin (3) and is designed in one piece and in an annular-disc shape being formed on the mounting plate (2), the balls (16) which interact with the clamping pin (3) being arranged to move radially with respect to the ball sleeve (15), **characterized in that**, to radially move the balls (16) between the piston (11) and the clamping pin (3), control flanks (26, 27, 28) are formed on the piston and on the clamping pin, the control flanks (26, 27, 28) having a different angle of inclination with respect to the clamping axis (z) in such a way that, with the radial movement of the balls (16), a reduction ratio of the transmission force of at least 3 to 1 is achieved and in particular in such a way that the clamping pin (3) can be mechanically locked with the mounting plate (2) in such a way that, in the clamped state of the device, the clamping pin (3) and the mounting plate (2) can be released only by destruction.

2. Device for holding workpieces in a releasable manner according to Claim 1, **characterized in that** the mounting plate (2), in the centring region (21), and the clamping pin (3) have clamping surfaces (23, 24) which interact with one another for the centring, run parallel to one another and are each designed as lateral surfaces of a frustum of a cone, the cone apex of which lies inside the device.

3. Device for holding workpieces in a releasable manner according to Claim 1 or 2, **characterized in that**, in the relieved state, the tapering clamping surface (23) in the centring region (21) of the mounting plate (2) is arranged closer, within the micron range, to the z-axis of the device than the tapering clamping surface (24) on the clamping pin (3).

4. Device for holding workpieces in a releasable manner according to one of Claims 1 to 3, **characterized in that** the tapering clamping surfaces (23, 24) arranged so as to interact with one another form, in the relieved state, an annular passage for a cleaning or flushing medium.

5. Device for holding workpieces in a releasable manner according to one of Claims 1 to 4, **characterized in that** the mounting plate (2) has at least two z-workrest regions (7, 8) of different design with feed openings (30) for the flushing or cleaning medium in such a way that the z-workrest regions are cleaned by the flow of the flushing or cleaning medium during the clamping operation, and it being possible, on account of the flow of the flushing or cleaning medium, to carry out a check for the presence of a workpiece adjacent to the z-workrest regions of the device.

## Revendications

1. Dispositif pour retenir de manière desserrable des pièces ou des palettes pour des pièces sur un dispositif de traitement, comprenant une plaque de serrage (2) qui peut être connectée au dispositif de traitement pour le traitement de la pièce, un mandrin de serrage (3), qui peut être connecté à la palette ou à la pièce, et qui peut être maintenu de manière desserrable dans la plaque de serrage (2), au moins un ressort (18) étant prévu pour produire une force de serrage pour la fixation du mandrin de serrage (3) à la plaque de serrage (2), un piston (11), qui peut être déplacé hydrauliquement ou pneumatiquement à l'encontre de la force de serrage, et une douille sphérique (15) avec des billes (16), qui peuvent être déplacées dans la douille sphérique par le piston (11) et qui sont disposées de manière à coopérer avec le mandrin de serrage (3) de telle sorte que le mandrin de serrage (3) puisse être desserré à l'encontre de la force de serrage, une région de centrage (21) coopérant avec le mandrin de serrage (3), réalisée d'une seule pièce et en forme de disque annulaire, étant réalisée sur la plaque de serrage (2), les billes (16) coopérant avec le mandrin de serrage (3) étant disposées par rapport à la douille sphérique (15) de manière déplaçable radialement, **caractérisé en ce que** pour le déplacement radial des billes (16) entre le piston (11) et le mandrin de serrage (3) sont réalisés des flancs de commande (26, 27, 28) sur le piston et sur le mandrin de serrage, les flancs de commande (26, 27, 28) présentant un angle d'inclinaison différent par rapport à l'axe de serrage (z), de telle sorte qu'une démultiplication du transfert de force d'au moins 3 à 1 soit obtenu avec le déplacement radial des billes (16) et notamment de telle sorte que le mandrin de serrage (3) puisse être verrouillé avec la plaque de serrage (2) mécaniquement de telle sorte que dans l'état serré du dispositif, le mandrin de serrage (3) et la plaque de serrage (2) ne puissent être desserrés que par destruction.

2. Dispositif pour retenir de manière desserrable des pièces selon la revendication 1, **caractérisé en ce que** la plaque de serrage (2) dans la région de centrage (21) et le mandrin de serrage (3) présentent des surfaces de serrage (23, 24) s'étendant parallèlement l'une à l'autre et coopérant l'une avec l'autre pour le centrage, qui sont réalisées à chaque fois sous forme de surfaces d'enveloppe d'un tronc de cône, dont la pointe de cône est disposée à l'intérieur du dispositif.

3. Dispositif pour retenir de manière desserrable des pièces selon la revendication 1 ou 2, **caractérisé en ce que** dans l'état desserré, la surface de serrage (23) se rétrécissant dans la région de centrage (21) de la plaque de serrage (2) est disposée dans la plage du micron plus près de l'axe z du dispositif que la surface de serrage (24) se rétrécissant sur le mandrin de serrage (3).

4. Dispositif pour retenir de manière desserrable des pièces selon l'une quelconque des revendications 1 à 3, **caractérisé en ce que** les surfaces de serrage (23, 24) disposées de manière à coopérer en se rétrécissant forment dans l'état desserré un canal annulaire pour un fluide de lavage ou de rinçage.

5. Dispositif pour retenir de manière desserrable des pièces selon l'une quelconque des revendications 1 à 4, **caractérisé en ce que** la plaque de serrage (2) présente au moins deux régions d'appui z (7, 8) réalisées différemment, avec des ouvertures d'alimentation (30) pour le fluide de rinçage ou de lavage, de telle sorte que les régions d'appui z soient nettoyées par l'écoulement du fluide de rinçage ou de lavage pendant l'opération de serrage, un contrôle de la présence d'une pièce à côté des régions d'appui z du dispositif pouvant être effectué du fait de l'écoulement du fluide de rinçage ou de lavage.
